# EUROPEAN PATENT APPLICATION

(11) **EP 1 830 296 A1**
(43) Date of publication of application: **05.09.2007**
(21) Application number: 07004241.1
(22) Date of filing: 01.03.2007
(51) Int. Cl.: G06F 21/00, H04L 9/00, H04M 1/725

(54) **Portable telephone and program for sending and receiving encrypted electronic mail**

(30) Priority: 02.03.2006 JP 2006056890
(71) Applicant: Aruze Corp., Tokyo 135-0063 (JP)
(72) Inventor: Sudo, Tomo, Tokyo 135-0063 (JP); Yoshida, Shuichiro, Tokyo 135-0063 (JP)
(74) Representative: HOFFMANN EITLE

(57) **Abstract**

A portable telephone includes a nonvolatile memory, a microcomputer and a liquid crystal panel. The nonvolatile memory stores a plurality of conversion tables employed when an encrypted electronic mail is generated or decrypted. Upon reception of an entry of key information corresponding to any one of the plurality of conversion tables, the microcomputer selects the one conversion table from among the plurality of conversion tables stored in the nonvolatile memory based on the key information. The microcomputer encrypts an electronic mail or decrypts an encrypted electronic mail by referring to the selected conversion table to display the encrypted electronic mail or the decrypted electronic mail on the liquid crystal panel.

## Description

### BACKGROUND OF THE INVENTION

### 1. Field of the Invention

The present invention relates to a portable telephone that can send and receive an electronic mail and a program for sending and receiving the electronic mail.

### 2. Description of the Related Art

Recently, a critical document or a classified document is exchanged by using an electronic mail because of the development of information and communications technology. In this situation, it is important to check a person who sends or receives the electronic mail. Especially, when a person sends the electronic mail to a wrong person, he/she can not delete the sent electronic mail.

There is a mail server that relays an electronic mail sent from a mail client and signs the electronic mail digitally. This mail server is disclosed in Japanese Patent Laid-open Publication No.2001-168902. Further, there is a payroll accounting and payout processing system that executes payroll accounting by sending in-and-out information to a sever by using an encrypted electronic mail at an in-and-out time of each employee. This payroll accounting and payout processing system is disclosed in Japanese Patent Laid-open Publication No.2001-273389.

There is a remote control system that controls a device located at a point distant from a user by using an encrypted electronic mail. This remore control system is disclosed in Japanese Patent Laid-open Publication No.2002-058077. Further, there is a method for multiplexing an electronic mail address that allows a user to access an electronic mail which is sent to the user only when a password input by the user coincides with his/her own password which is previously stored, in a situation that the electronic mail address which is previously stored is shared with a plurality of users. This method is disclosed in Japanese Patent Laid-open Publication No.H11-331242.

These inventions however have the following problems: (1) the first invention has a problem that there is no method for checking whether or not the electronic mail is sent from an authorized person, in a case where a malicious person impersonates the authorized person and sends an electronic mail by using a mail address of the authorized person; (2) the second and third inventions have a problem that a malicious person can know contents of the encrypted electronic mail if the malicious person operates a device (e.g. personal computer) receiving the encrypted electronic mail without permission, because the device automatically decrypts the encrypted electronic mail when receiving the encrypted electronic mail to which an regular mail address is attached; and (3) the fourth invention has a problem that a new specifying field (e.g. a source user specifying field and a destination user specifying field) to which a mail server refers in order to specify a source user and a destination user should be added to the electronic mail because the electronic mail address is shared with the plurality of users.

### SUMMARY OF THE INVENTION

It is an object of the present invention to provide a portable telephone and a program for sending and receiving an electronic mail which are capable of checking whether or not a received electronic mail is sent from an authorized person without adding a new specifying field to the electronic mail, and preventing a malicious person from reading the electronic mail even if the malicious person impersonates the authorized person.

In order to achieve the object, the present invention provides a portable telephone comprising: an encrypted electronic mail receiving means for receiving an encrypted electronic mail; an encrypted electronic mail storing means for storing the encrypted electronic mail received by the encrypted electronic mail receiving means; a conversion table storing means for storing a plurality of conversion tables which are employed when an encrypted electronic mail is generated or decrypted; a key information input means for receiving an entry of key information corresponding to any one of the plurality of conversion tables stored in the conversion table storing means; a conversion table deciding means for deciding one conversion table from among the plurality of conversion tables stored in the conversion table storing means based on the key information entered from the key information input means; a decrypted electronic mail generating means for decrypting the encrypted electronic mail stored in the encrypted electronic mail storing means to generate an decrypted electronic mail by referring to the conversion table decided by the conversion table deciding means; a decrypted electronic mail temporarily storing means for temporarily storing the decrypted electronic mail generated by the decrypted electronic mail generating means; a display means for displaying the decrypted electronic mail; a display control means for controlling the display of the decrypted electronic mail stored in the decrypted electronic mail temporarily storing means on the display means; and a decrypted electronic mail deleting means for deleting the decrypted electronic mail stored in the decrypted electronic mail temporarily storing means according to reception of an entry of instruction to finish the display of the decrypted electronic mail.

In order to achieve the object, the present invention provides a portable telephone comprising: an electronic mail storing means for storing a created electric mail; a conversion table storing means for storing a plurality of conversion tables which are employed when an encrypted electronic mail is generated or decrypted; a key information input means for receiving an entry of key information corresponding to any one of the plurality of conversion tables stored in the conversion table storing means; a conversion table deciding means for deciding one conversion table from among the plurality of conversion tables stored in the conversion table storing means based on the key information entered from the key information input means; an encrypted electronic mail generating means for encrypting an electronic mail stored in the electronic mail storing means to generate an encrypted electronic mail by referring to the conversion table decided by the conversion table deciding means; an encrypted electronic mail sending means for sending the encrypted electronic mail; and a deleting means for deleting the electronic mail corresponding to the encrypted electronic mail from the electronic mail storing means after the encrypted electronic mail sending means sends the encrypted electronic mail.

In order to achieve the object, the present invention provides a portable telephone usable medium having a portable telephone readable program code embodied therein for sending and receiving an electronic mail, the portable telephone readable program code comprising: a first portable telephone readable program code for causing the portable telephone to receive an encrypted electronic mail; a second portable telephone readable program code for causing the portable telephone to store the encrypted electronic mail; a third portable telephone readable program code for causing the portable telephone to store a plurality of conversion tables which are employed when an encrypted electronic mail is generated or decrypted; a fourth portable telephone readable program code for causing the portable telephone to receive an entry of key information corresponding to any one of the plurality of conversion tables; a fifth portable telephone readable program code for causing the portable telephone to decide one conversion table from among the plurality of conversion tables based on the entered key information; a sixth portable telephone readable program code for causing the portable telephone to decrypt the encrypted electronic mail to generate an decrypted electronic mail by referring to the decided conversion table; a seventh portable telephone readable program code for causing the portable telephone to temporarily store the generated decrypted electronic mail; an eighth portable telephone readable program code for causing the portable telephone to display the decrypted electronic mail; a ninth portable telephone readable program code for causing the portable telephone to control the display of the stored decrypted electronic mail; and a tenth portable telephone readable program code for causing the portable telephone to delete the stored decrypted electronic mail according to reception of an entry of instruction to finish the display of the decrypted electronic mail.

In order to achieve the object, the present invention provides a portable telephone usable medium having a portable telephone readable program code embodied therein for sending and receiving an electronic mail, the portable telephone readable program code comprising: a first portable telephone readable program code for causing the portable telephone to store a created electric mail; a second portable telephone readable program code for causing the portable telephone to store a plurality of conversion tables which are employed when an encrypted electronic mail is generated or decrypted; a third portable telephone readable program code for causing the portable telephone to receive an entry of key information corresponding to any one of the plurality of conversion tables; a fourth portable telephone readable program code for causing the portable telephone to decide one conversion table from among the plurality of conversion tables based on the entered key information; a fifth portable telephone readable program code for causing the portable telephone to encrypt the electronic mail to generate an encrypted electronic mail by referring to the decided conversion table; a sixth portable telephone readable program code for causing the portable telephone to send the generated encrypted electronic mail; and a seventh portable telephone readable program code for causing the portable telephone to delete the electronic mail corresponding to the encrypted electronic mail after sending the encrypted electronic mail.

### BRIEF DESCRIPTION OF THE DRAWINGS

FIG.1 is a perspective view of a portable telephone according to an exemplary embodiment of the present invention.
FIG.2 is a block diagram of an internal configuration of the portable telephone shown in FIG.1.
FIG.3 is an explanatory diagram of conversion tables of Katakana version according to the exemplary embodiment of the present invention.
FIG.4 is a flowchart of an encrypted mail sending process executed by the portable telephone according to the exemplary embodiment of the present invention.
FIG.5 is an explanatory diagram showing a method for deciding one of the conversion tables according to the exemplary embodiment of the present invention;
FIG.6A is an explanatory diagram showing an electronic mail (Katakana version) displayed on a liquid crystal panel of the portable telephone according to the exemplary embodiment of the present invention;
FIG.6B is an explanatory diagram showing an encrypted electronic mail (Katakana version) after encrypting the electronic mail according to the exemplary embodiment of the present invention;
FIG.7 is a flowchart of an encrypted mail decrypting process executed by the portable telephone according to the exemplary embodiment of the present invention;
FIG.8A is an explanatory diagram showing an encrypted electronic mail (Katakana version) displayed on the liquid crystal panel of the portable telephone according to the exemplary embodiment of the present invention; and
FIG.8B is an explanatory diagram showing a decrypted electronic mail (Katakana version) after decrypting the encrypted electronic mail according to the exemplary embodiment of the present invention.
FIG.9 is an explanatory diagram of conversion tables of Alphabet version according to the exemplary embodiment of the present invention.
FIG.10A is an explanatory diagram showing an electronic mail (Alphabet version) displayed on the liquid crystal panel of the portable telephone according to the exemplary embodiment of the present invention;
FIG.10B is an explanatory diagram showing an encrypted electronic mail (Alphabet version) after encrypting the electronic mail according to the exemplary embodiment of the present invention;
FIG.11A is an explanatory diagram showing an encrypted electronic mail (Alphabet version) displayed on the liquid crystal panel of the portable telephone according to the exemplary embodiment of the present invention; and
FIG. 11B is an explanatory diagram showing a decrypted electronic mail (Alphabet version) after decrypting the encrypted electronic mail according to the exemplary embodiment of the present invention.

### DESCRIPTION OF THE PREFERRED EMBODIMENTS

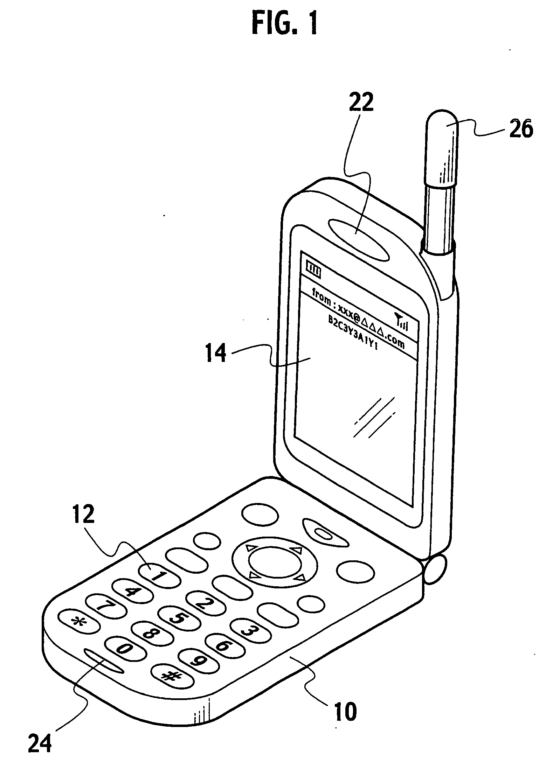

With reference to FIGS.1 to 11B, an exemplary embodiment of the present invention will be described below.

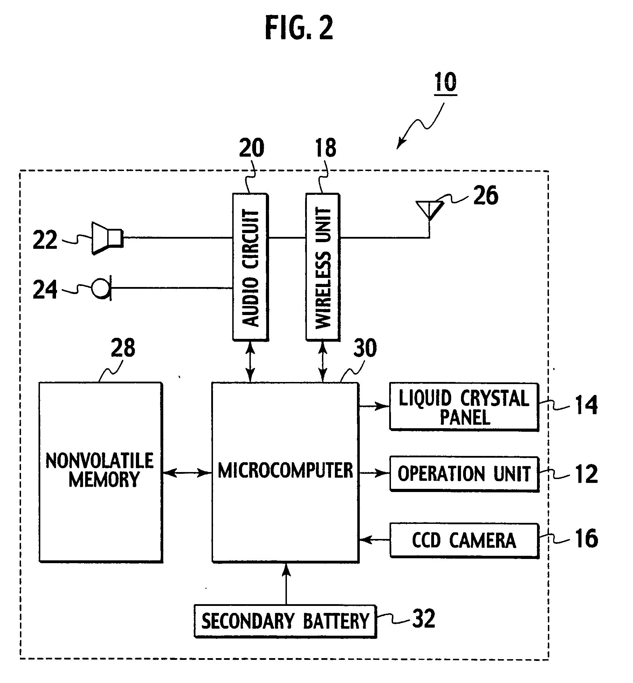

As shown in FIGS. 1 and 2, a portable telephone 10 comprises an operation unit 12, a liquid crystal panel 14 , a CCD camera 16, a wireless unit 18, an audio circuit 20, a speaker 22, a microphone 24, a transmitting and receiving antenna 26, a nonvolatile memory 28, a microcomputer 30 and a secondary battery 32.

The wireless unit 18 is controlled by the microcomputer 30 and transmits or receives a radio wave to or from a base station through the transmitting and receiving antenna 26. The audio circuit 20 outputs to the speaker 22 through the microcomputer 30 a receiving signal output from the wireless unit 18 and outputs to the wireless unit 18 through the microcomputer 30 an audio signal output from the microphone 24 as a transmitting signal.

The speaker 22 converts into a sound the received signal output from the audio circuit 20 and outputs the sound to the outside of the portable telephone 10. The microphone 24 converts into the transmitting signal a sound produced by an operator and outputs the transmitting signal to the audio circuit 20. The CCD camera 16 captures an object on the portable telephone 10. The microcomputer 30 converts the captured object into image data and stores the image data in the nonvolatile memory 28.

The liquid crystal panel 14 displays characters entered via the operation unit 12, images based on objects captured by the CCD camera 16, or a mail document and/or an image received via the transmitting and receiving antenna 26 thereon.

The secondary battery 32 supplies an electronic power into each circuit. The microcomputer 30 consists of a CPU (central processing unit), a ROM (read only memory) and a RAM (random access memory) and executes an incoming and outgoing calls process, an electronic mail sending and receiving process, an Internet process and the like. The microcomputer 30 sends and receives an electronic mail or Internet-based data by using the wireless unit 18 and the transmitting and receiving antenna 26.

The nonvolatile memory 28 stores electronic mail data entered via the operation unit 12, image data based on the object captured by the CCD camera 16, electronic mail data received via the transmitting and receiving antenna 26 and various programs. Especially, the nonvolatile memory 28 stores an electronic mail sending and receiving program and one or more conversion tables (e.g. 10 conversion tables according to this embodiment). The nonvolatile memory 28 functions as an electronic mail storing means for storing an electronic mail. The nonvolatile memory 28 also functions as a conversion table storing means for storing the conversion tables.

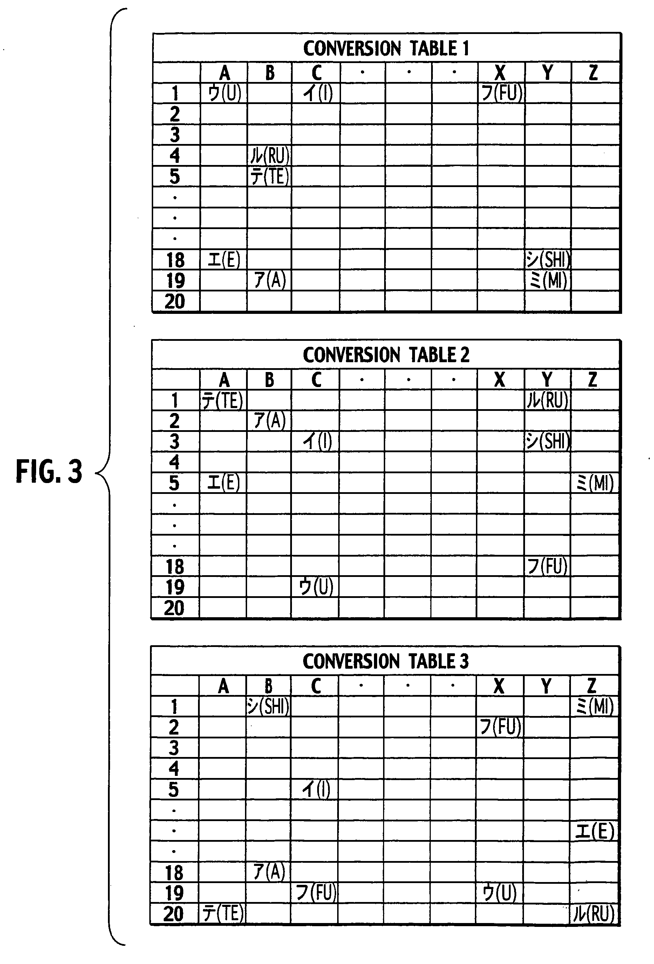

As shown in FIG. 3, the conversion table of Katakana version is formed by a plurality of cells each which is specified by a combination of one of alphabets A to Z and one of numerals 1 to 20. In each cell, Katakana " 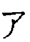 (A)" to " 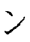 (N)" used in Japanese writing are stored in a part of the cells. For example, in a case where the portable telephone 10 selects a conversion table 1, if Katakana " 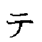 (TE)" is written in a main body of an electronic mail, the microcomputer 30 encrypts Katakana " 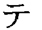 (TE) "into "B5" with reference to the conversion table 1 because Katakana " 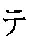 (TE)" is specified by a combination B5 in the conversion table 1. In contrast, if "B5" is written in a main body of an encrypted electronic mail, the microcomputer 30 decrypts "B5" into Katakana " 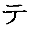 (TE)" with reference to the conversion table 1.

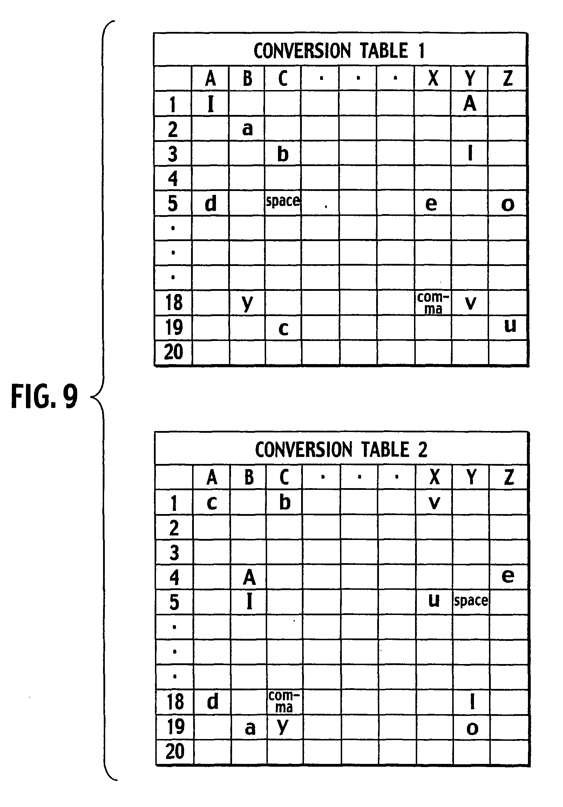

Similarly, as shown in FIG.9, the conversion table of Alphabet version is formed by a plurality of cells each which is specified by a combination of one of alphabets A to Z and one of numerals 1 to 20. Alphabet "A" to "Z" and "a" to "z", a space, a comma, a colon, a question mark, an exclamation mark and the like used in English writing are stored in a part of the cells. For example, in a case where the portable telephone 10 selects a conversion table 1, if Alphabet "I" is written in a main body of an electronic mail, the microcomputer 30 encrypts Alphabet "I" into "A1" with reference to the conversion table 1 because Alphabet "I" is specified by a combination A1 in the conversion table 1. In contrast, if "A1" is written in a main body of an encrypted electronic mail, the microcomputer 30 decrypts "A1" into Alphabet "I" with reference to the conversion table 1.
Although the exemplary embodiment will be described on the assumption that the conversion tables have been previously stored in the portable telephone 10, the conversion tables may be received from the outside (e.g. a server) of the portable telephone 10 just before the microcomputer 30 encrypts the created electronic mail or decrypts the received encrypted electronic mail.

The nonvolatile memory 28 stores an equation for deciding one conversion table from among the plurality of conversion tables based on key information entered via the operation unit 12 which functions as a key information input means. The microcomputer 30 decides one conversion table from among the plurality of conversion tables based on a result calculated from the entered key information by the equation.

The microcomputer 30 encrypts an electronic mail by referring to the decided conversion table to generate an encrypted electronic mail. The microcomputer 30 sends the generated encrypted electronic mail.

On the other hand, upon reception of the encrypted electronic mail via the transmitting and receiving antenna 26, the microcomputer 30 requests an entry of key information. Then, based on the key information, the microcomputer 30 decrypts the encrypted electronic mail by referring to the conversion table decided by the equation to generate a decrypted electronic mail. The microcomputer 30 stores the generated decrypted electronic mail in the RAM which functions as a decrypted electronic mail temporarily storing means in the microcomputer 30.

The microcomputer 30 displays the decrypted electronic mail on the liquid crystal panel 14. However, upon an entry of an instruction of finishing the display of the decrypted electronic mail via the operation unit 12, the microcomputer 30 deletes the decrypted mail stored in the RAM.

As described above, the microcomputer 30 functions as an encrypted electronic mail receiving means for receiving an encrypted electronic mail by reading and executing the electronic mail sending and receiving program stored in the nonvolatile memory 28, a conversion table deciding means for deciding one conversion table from among the plurality of conversion tables stored in the nonvolatile memory 28 based on the key information entered from the operation unit 12, a decrypted electronic mail generating means for decrypting the encrypted electronic mail by referring to the conversion table decided by the conversion table deciding means to generate the decrypted electronic mail, a display control means for controlling the display of the decrypted electronic mail stored in the RAM on the liquid crystal panel 14, and a decrypted electronic mail deleting means for deleting the decrypted electronic mail stored in the RAM according to reception of an entry of instruction to finish the display of the decrypted electronic mail from the operation unit 12.

Further, as described above, the microcomputer 30 functions as the conversion table deciding means for deciding one conversion table from among the plurality of conversion tables stored in the nonvolatile memory 28 based on the key information entered from the operation unit 12, an encrypted electronic mail generating means for encrypting the electronic mail by referring to the conversion table decided by the conversion table deciding means to generate the encrypted electronic mail, an encrypted electronic mail sending means for sending the encrypted electronic mail, and a deleting means for deleting the electronic mail corresponding to the encrypted electronic mail from the nonvolatile memory 28 after sending the encrypted electronic mail.

Although the exemplary embodiment will be described on the assumption that the electronic mail sending and receiving program has been previously stored (preinstalled) in the portable telephone 10, the electronic mail sending and receiving program may be stored in a server (e. g. storage device such as a hard disk drive in the server) and be downloaded by the portable telephone 10 just before the microcomputer 30 sends or receives the encrypted electronic mail.

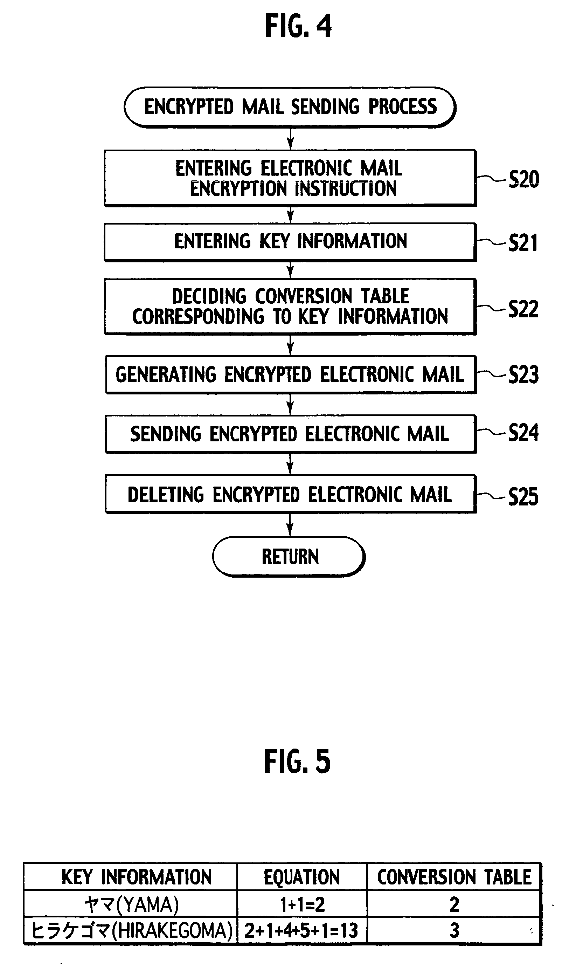

Next, an encrypted mail sending process will be described with reference to FIGS.4 to 6B, 10A and 10B.

The encrypted mail sending process is executed after an electronic mail is created and source and destination addresses are attached to the created electronic mail. The created electronic mail is stored in the nonvolatile memory 28.

In step S20, the microcomputer 30 receives an entry of an electronic mail encryption instruction via the operation unit 12.

In step S21, the microcomputer 30 receives an entry of key information via the operation unit 12.

In step S22, the microcomputer 30 decides a conversion table corresponding to the key information. At this time, the microcomputer 30 decides one conversion table from among the plurality of conversion tables based on a predetermined equation. In step S22 , the microcomputer 30 functions as the conversion table deciding means for deciding one conversion table from among the plurality of conversion tables.

Numerical values "1", "2", "3", "4", and "5" are assigned to characters of Katakana " 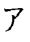 (A)", " 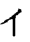 (I)", " 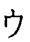 (U)", " I (E)" and (O)" lines, respectively. It is here noted that " 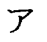 (A)", " 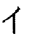 (I)", " 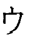 (U)", " 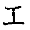 (E)" and " 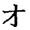 (O)" are vowels of standard Japanese. When the operation unit 12 enters a plurality of characters as the key information, the microcomputer 30 extracts a vowel of each character to obtain a numerical value assigned to each extracted vowel, and then adds the obtained numerical values together. The microcomputer 30 further detects a numerical value in a lower single digit of the summation and selects a conversion table to which the detected numerical value is assigned as a conversion table number, from among the plurality of conversion tables.

For example, as shown in FIG.5 , if Katakana " 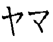 (YAMA)" is entered as key information, the microcomputer 30 extracts " 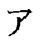 (A)" as the vowel of " 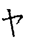 (YA)" to obtain a numerical value "1" assigned to " 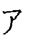 (A)". Similarly, the microcomputer 30 extracts " 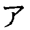 (A)" as the vowel of " 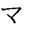 (MA) "to obtain a numerical value "1" assigned to " 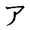 (A)". The microcomputer 30 further adds the obtained numerical values "1" and "1" together. Accordingly, the microcomputer 30 selects the conversion table 2 to which the numerical value "2" is assigned as a conversion table number, from among the plurality of conversion tables.

If Katakana " 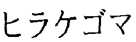 (HIRAKEGOMA)" is entered as key information, the microcomputer 30 extracts " 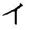 (I)" as the vowel of " 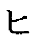 (HI)", " 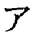 (A)" as the vowel of " 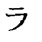 (RA)", " 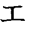 (E)" as the vowel of " 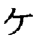 (KE)", " 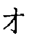 (O)" as the vowel of " 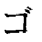 (GO)" and " 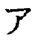 (A)" as the vowel of " 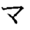 (MA)", to obtain numerical values "2" assigned to " 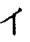 (I)", "1" assigned to "7 (A)", "4" assigned to " 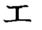 (E)", "5" assigned to " 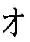 (O)" and "1" assigned to " 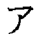 (A)". Then, the microcomputer 30 adds the obtained numerical values "2", "1", "4", "5" and "1" together. The microcomputer 30 further detects a numerical value "3" in a lower single digit of the summation "13" and selects the conversion table 3 to which the detected numerical value "3" is assigned as a conversion table number, from among the plurality of conversion tables.

According to the present invention, the key information is information which enables a sender and a receiver to refer to the same conversion table by using the key information when sending or receiving the encrypted electronic mail. The exemplary embodiment will be described on the assumption that the key information consists of a plurality of characters.

In step S23 , the microcomputer 30 generates an encrypted electronic mail by referring to the decided conversion table. In the step S23, the microcomputer 30 functions as the encrypted electronic mail generating means for encrypting an electronic mail by referring to the decided conversion table to generate an encrypted electronic mail.

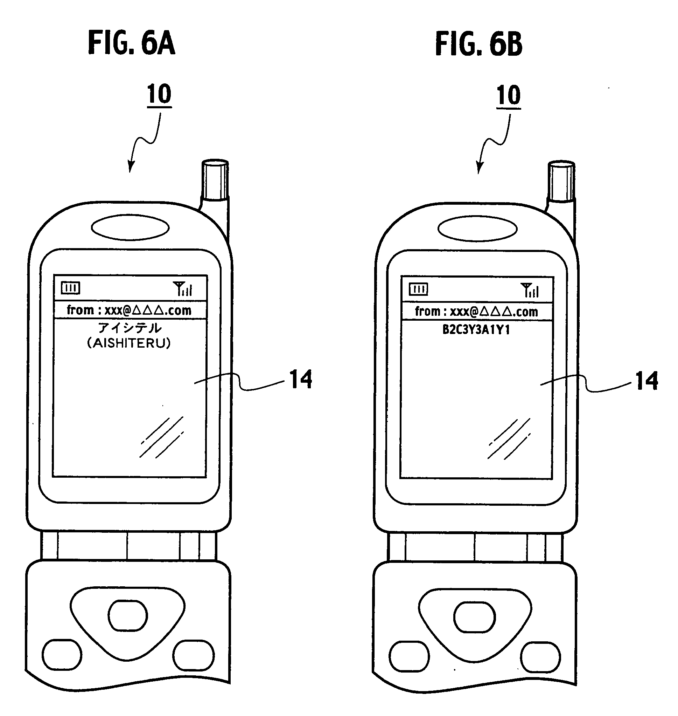

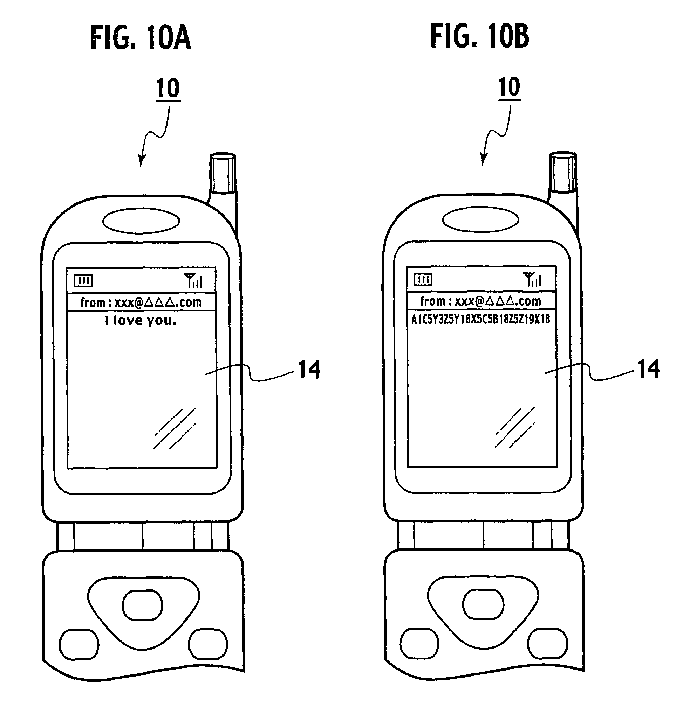

For example, when the microcomputer 30 creates an electronic mail shown in FIG. 6A (or FIG. 10A) , the microcomputer 30 executes the processes of step S21 to S23 to generate an encrypted electronic mail shown in FIG.6B (or FIG.10B).

In step S24, the microcomputer 30 sends the generated encrypted electronic mail to a destination address. In step S24 , the microcomputer 30 functions as the encrypted electronic mail sending means for sending the encrypted electronic mail.

In step S25 , the microcomputer 30 deletes the electronic mail corresponding to the encrypted electronic mail from the nonvolatile memory 28 and then finishes this process. In the step S25, the microcomputer 30 functions as the deleting means for deleting the electronic mail corresponding to the encrypted electronic mail.

It is noted that the electronic mail corresponding to the encrypted electronic mail may be stored in the nonvolatile memory 28 without being deleted. In a case where the microcomputer 30 continues to store the encrypted electronic mail in the nonvolatile memory 28, only an owner of the portable telephone 10 checks the contents of the sent electronic mail because it is encrypted. On the other hand, in a case where the electronic mail corresponding to the encrypted electronic mail is deleted, this certainly prevents a third party from reading the contents of the sent electronic mail.

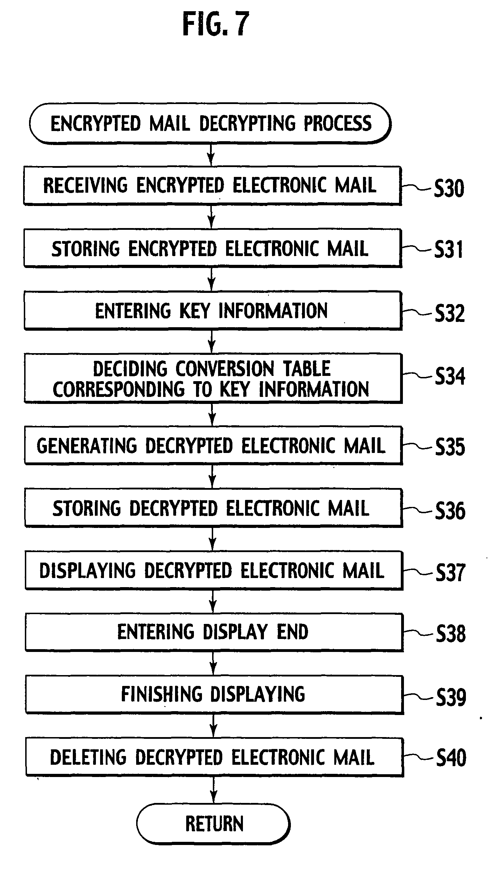

Next, an encrypted mail decrypting process will be described with reference to FIGS. 7 to 8B, 11A and 11B.

In step S30, the microcomputer 30 receives an encrypted electronic mail sent from another portable telephone 10. In step S30, the microcomputer 30 functions as the encrypted electronic mail receiving means for receiving the encrypted electronic mail.

In step S31, the microcomputer 30 stores the received encrypted electronic mail in the nonvolatile memory 28. The nonvolatile memory 28 functions as an encrypted electronic mail storing means for storing the received encrypted electronic mail.

In step S32, the microcomputer 30 receives an entry of key information via the operation unit 12 which functions as the key information input means.

In step S34, the microcomputer 30 decides a conversion table corresponding to key information. At this time, the microcomputer 30 decides one conversion table from among the plurality of conversion tables based on a predetermined equation. In step S34, the microcomputer 30 functions as the conversion table deciding means for deciding one conversion table from among the plurality of conversion tables.

In step S35 , the microcomputer 30 generates a decrypted electronic mail by referring to the decided conversion table. In the step S35 , the microcomputer 30 functions as the decrypted electronic mail generating means for decrypting the encrypted electronic mail stored in the nonvolatile memory 28 by referring to the conversion table to generate a decrypted electronic mail.

In step S36, the microcomputer 30 stores the generated decrypted electronic mail in the RAM which functions as the decrypted electronic mail temporarily storing means.

In step S37, the microcomputer 30 displays the decrypted electronic mail stored in the RAM on the liquid crystal panel 14. In step S37, the microcomputer 30 functions as the display control means for controlling the display of the decrypted electronic mail on the liquid crystal panel 14.

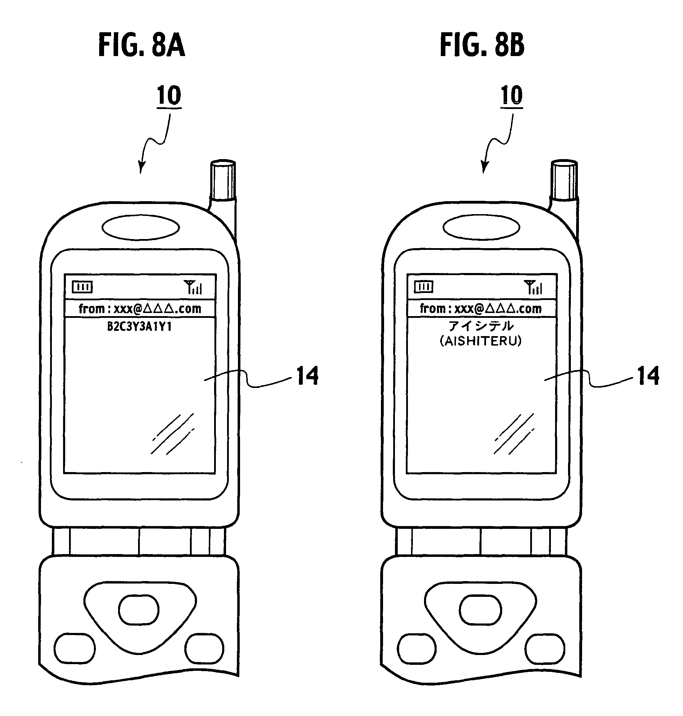

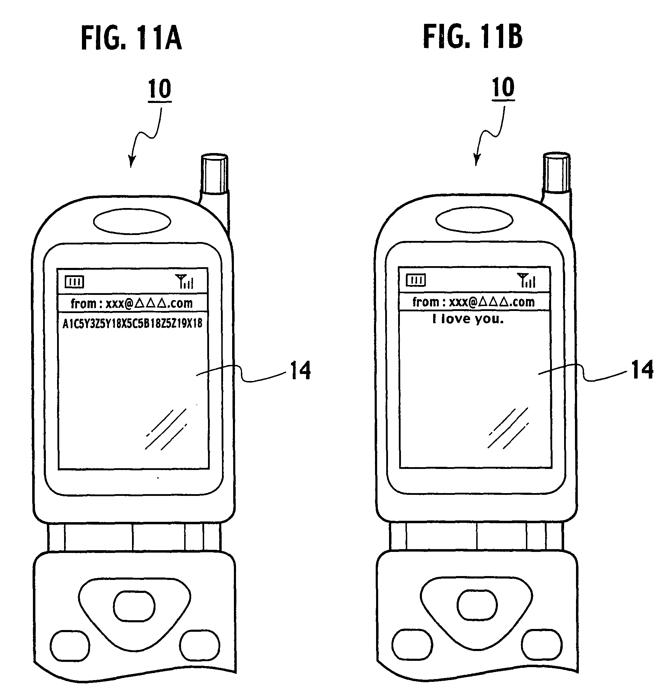

For example, when the microcomputer 30 receives an encrypted mail shown in FIG. 8A (or FIG. 11A) , the microcomputer 30 displays a decrypted mail shown in FIG. 8B (or FIG.11B) on the liquid crystal panel 14 in step S37 after executing the steps S31 to S36.

In step S38, upon reception of a decrypted electronic mail displaying end entry via the operation unit 12, the microcomputer 30 finishes the display of the decrypted electronic mail (step S39), and deletes the decrypted electronic mail stored in the RAM of the microcomputer 30 (step S40) to finish this process. In the step S40 , the microcomputer 30 functions as the decrypted electronic mail deleting means for deleting the decrypted electronic mail stored in the RAM according to reception of an entry of instruction to finish the display of the decrypted electronic mail. The microcomputer 30 may delete the received encrypted electronic mail corresponding to the decrypted electronic mail from the nonvolatile memory 28 in step S40.

Next, advantageous features of the portable telephone 10 and the program for sending and receiving an electronic mail according to the present invention will be described.

The portable telephone 10 decrypts the received encrypted electronic mail by referring to one conversion table which is selected from among the plurality of conversion tables based on the entry of key information. Therefore, by previously sharing key information between the sender and the receiver of the encrypted electronic mail, the receiver can decrypts the encrypted electronic mail by using the key information shared between the sender and the receiver to generate a decrypted electronic mail. This prevents a third party who does not know the key information shared between the sender and receiver from reading the decrypted electronic mail.

Unless the key information is previously shared between the sender and the receiver, the receiver can not decrypt the encrypted electronic mail. This prevents a third party who does not share the key information used by the sender to encrypt a created electronic mail from reading the decrypted electronic mail. Also, the receiver can easily know that the encrypted electronic mail is sent from a third party who does not share the key information with the receiver when the received encrypted electronic mail is not correctly decrypted. This allows the receiver to easily check whether or not the received electronic mail is sent from an authorized person without adding a new specifying field to the electronic mail.

Even if the sender sends a created electronic mail to a wrong person, the wrong person can not know the contents of the electronic mail because he/she does not share the key information with the sender.

If lovers share key information, the strength of their intimacy increases.

The portable telephone 10 encrypts a created electronic mail by referring to one conversion table which is selected from among the plurality of conversion tables based on the entry of key information to generate an encrypted electronic mail. The generated encrypted electronic mail is not decrypted without using the same conversion table. This prevents a third party who does not share the key information with the receiver from reading the decrypted electronic mail.

The portable telephone 10 deletes the conversion table after sending the encrypted electronic mail or displaying the decrypted electronic mail. This reduces a possibility that a third party gets the conversion table.

Even if the sender sends the encrypted electronic mail to a wrong person who has the same encryption and decryption program as the sender has, the wrong person can not decrypt the received encrypted electronic mail because only two or more owners who plan to exchange an electronic mail share key information. This reduces a possibility that the wrong person decrypts the received encrypted electronic mail.

If the portable telephone 10 receives a non-encrypted electronic mail, the portable telephone 10 may allow a user to read the non-encrypted electronic mail without inputting key information. This achieves a good balance between secrecy and convenience.

Next, modified embodiment of the present invention will be described.

In a case where the conversion table is received from the outside (e.g. a server) of the portable telephone 10 just before the microcomputer 30 encrypts the created electronic mail or decrypts the received encrypted electronic mail, an encrypted mail sending process and an encrypted mail decrypting process will be described.

In the encrypted mail sending process, the microcomputer 30 first receives an entry of key information via the operation unit 12. The microcomputer 30 second calculates a conversion table number based on the predetermined equation. The microcomputer 30 third transmits the detected conversion table number to the server. The server detects a conversion table corresponding to the detected conversion table number from a hard disk drive thereof. The server next transmits the detected conversion table to the portable telephone 10. Then, the microcomputer 30 stores the received conversion table in the nonvolatile memory 28 and then encrypts the created electronic mail by referring to the received conversion table. The microcomputer 30 finally sends the encrypted electronic mail and then deletes the received conversion table from the nonvolatile memory 28.

In the encrypted mail decrypting process, the microcomputer 30 first receives an entry of key information via the operation unit 12. The microcomputer 30 second calculates a conversion table number based on the predetermined equation. The microcomputer 30 third transmits the detected conversion table number to the server. The server detects a conversion table corresponding to the detected conversion table number from the hard disk drive thereof. The server next transmits the detected conversion table to the portable telephone 10. Then, the microcomputer 30 stores the received conversion table in the nonvolatile memory 28 and then decrypts the encrypted electronic mail by referring to the received conversion table. The microcomputer 30 finally displays the decrypted electronic mail on the liquid crystal panel 14 and then deletes the decrypted electronic mail and the received conversion table from the RAM and the nonvolatile memory 28 upon reception of a decrypted electronic mail displaying end entry via the operation unit 12.

Although the exemplary embodiment is described on the assumption that each of the encrypted electronic mail storing means, the conversion table storing means and the electronic mail storing means is the nonvolatile memory 28, each of these means may be a removable medium. Although the exemplary embodiment is described on the assumption that the decrypted electronic mail temporarily storing means is the RAM, the exemplary embodiment is not limitative in this regard.

Although the exemplary embodiment is described on the assumption that the key information is information constituted of a plurality of characters, any key information can be used as long as the sender and the receiver can refer to one conversion table by using the key information. Furthermore, as long as the sender and the receiver can refer to one conversion table, key information may vary between the sender and the receiver.

In languages other than Japanese, the microcomputer 30 can similarly calculate the summation by using the prescribed equation based on the entered key information if numerical values (integer) starting from 1 are sequentially assigned to vowels of each language.

The exemplary embodiment is to be considered in all respects as illustrative and not restrictive. The present invention may be therefore embodied in other specific forms without departing from the essential characteristics thereof.

## Claims

1. A portable telephone (10) comprising:
an encrypted electronic mail receiving means (30) for receiving an encrypted electronic mail;
an encrypted electronic mail storing means (28) for storing the encrypted electronic mail received by the encrypted electronic mail receiving means (30);
a conversion table storing means (28) for storing a plurality of conversion tables which are employed when an encrypted electronic mail is generated or decrypted;
a key information input means (12) for receiving an entry of key information corresponding to any one of the plurality of conversion tables stored in the conversion table storing means (28);
a conversion table deciding means (30) for deciding one conversion table from among the plurality of conversion tables stored in the conversion table storing means (28) based on the key information entered from the key information input means (12);
a decrypted electronic mail generating means (30) for decrypting the encrypted electronic mail stored in the encrypted electronic mail storing means (28) to generate an decrypted electronic mail by referring to the conversion table decided by the conversion table deciding means (30);
a decrypted electronic mail temporarily storing (30) means for temporarily storing the decrypted electronic mail generated by the decrypted electronic mail generating means (30);
a display means (14) for displaying the decrypted electronic mail;
a display control means (30) for controlling the display of the decrypted electronic mail stored in the decrypted electronic mail temporarily storing means (30) on the display means (14); and
a decrypted electronic mail deleting means (30) for deleting the decrypted electronic mail stored in the decrypted electronic mail temporarily storing means (30) according to reception of an entry of instruction to finish the display of the decrypted electronic mail.

2. A portable telephone (10) comprising:
an electronic mail storing means (28) for storing a created electric mail;
a conversion table storing means (28) for storing a plurality of conversion tables which are employed when an encrypted electronic mail is generated or decrypted;
a key information input means (12) for receiving an entry of key information corresponding to any one of the plurality of conversion tables stored in the conversion table storing means (28);
a conversion table deciding means (30) for deciding one conversion table from among the plurality of conversion tables stored in the conversion table storing means (28) based on the key information entered from the key information input means (12);
an encrypted electronic mail generating means (30) for encrypting an electronic mail stored in the electronic mail storing means (28) to generate an encrypted electronic mail by referring to the conversion table decided by the conversion table deciding means (30);
an encrypted electronic mail sending means (30) for sending the encrypted electronic mail; and
a deleting means (30) for deleting the electronic mail corresponding to the encrypted electronic mail from the electronic mail storing means (28) after the encrypted electronic mail sending means (30) sends the encrypted electronic mail.

3. A portable telephone usable medium (28) having a portable telephone readable program code embodied therein for sending and receiving an electronic mail, the portable telephone readable program code comprising:
a first portable telephone readable program code for causing the portable telephone (10) to receive an encrypted electronic mail;
a second portable telephone readable program code for causing the portable telephone (10) to store the encrypted electronic mail;
a third portable telephone readable program code for causing the portable telephone (10) to store a plurality of conversion tables which are employed when an encrypted electronic mail is generated or decrypted;
a fourth portable telephone readable program code for causing the portable telephone (10) to receive an entry of key information corresponding to any one of the plurality of conversion tables;
a fifth portable telephone readable program code for causing the portable telephone (10) to decide one conversion table from among the plurality of conversion tables based on the entered key information;
a sixth portable telephone readable program code for causing the portable telephone (10) to decrypt the encrypted electronic mail to generate an decrypted electronic mail by referring to the decided conversion table;
a seventh portable telephone readable program code for causing the portable telephone (10) to temporarily store the generated decrypted electronic mail;
an eighth portable telephone readable program code for causing the portable telephone (10) to display the decrypted electronic mail;
a ninth portable telephone readable program code for causing the portable telephone (10) to control the display of the stored decrypted electronic mail; and
a tenth portable telephone readable program code for causing the portable telephone (10) to delete the stored decrypted electronic mail according to reception of an entry of instruction to finish the display of the decrypted electronic mail.

4. A portable telephone usable medium (28) having a portable telephone readable program code embodied therein for sending and receiving an electronic mail, the portable telephone readable program code comprising:
a first portable telephone readable program code for causing the portable telephone (10) to store a created electric mail;
a second portable telephone readable program code for causing the portable telephone (10) to store a plurality of conversion tables which are employed when an encrypted electronic mail is generated or decrypted;
a third portable telephone readable program code for causing the portable telephone (10) to receive an entry of key information corresponding to any one of the plurality of conversion tables;
a fourth portable telephone readable program code for causing the portable telephone (10) to decide one conversion table from among the plurality of conversion tables based on the entered key information;
a fifth portable telephone readable program code for causing the portable telephone (10) to encrypt the electronic mail to generate an encrypted electronic mail by referring to the decided conversion table;
a sixth portable telephone readable program code for causing the portable telephone (10) to send the generated encrypted electronic mail; and
a seventh portable telephone readable program code for causing the portable telephone (10) to delete the electronic mail corresponding to the encrypted electronic mail after sending the encrypted electronic mail.
